(19) Europäisches Patentamt
European Patent Office
Office européen des brevets

(11) **EP 1 830 264 A1**

(12) **DEMANDE DE BREVET EUROPEEN**

(43) Date de publication:
**05.09.2007 Bulletin 2007/36**

(51) Int Cl.:
**G06F 9/48** *(2006.01)*

(21) Numéro de dépôt: **06024911.7**

(22) Date de dépôt: **01.12.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **09.12.2005 FR 0512502**

(71) Demandeur: **STMICROELECTRONICS SA**
**92120 Montrouge (FR)**

(72) Inventeurs:
• **Ayrignac, Renaud**
  **38210 La Riviere (FR)**
• **Sename, Isabelle**
  **38100 Grenoble (FR)**

(74) Mandataire: **Marchand, André**
**OMNIPAT,**
**24 Place des Martyrs de la Résistance**
**13100 Aix-en-Provence (FR)**

(54) **Procédé et dispositif de sauvegarde et de restauration d'une manière interruptible d'un ensemble de registres d'un microprocesseur**

(57) L'invention concerne un procédé d'exécution par un processeur d'une instruction de sauvegarde/restauration (PUSH #IM, POP #IM) de plusieurs registres (Ri) internes du processeur, comprenant des étapes de décomposition de l'instruction de sauvegarde/restauration pour générer des micro instructions de sauvegarde/restauration (PUSH Ri, POP Ri) du contenu d'un registre (Ri), et d'exécution de chacune des micro instructions. Selon l'invention, le procédé comprend des étapes d'initialisation d'un état d'avancement (PMSK) de la sauvegarde/restauration des registres (Ri), de mise à jour de l'état d'avancement de la sauvegarde/restauration à chaque génération d'une micro instruction de sauvegarde/restauration d'un registre (PUSH Ri, POP Ri), et de sauvegarde de l'état d'avancement en cas d'interruption de la sauvegarde/restauration des registres, pour exécuter une tâche plus prioritaire et de restauration de l'état d'avancement lors de la reprise de la sauvegarde/restauration des registres.

Fig. 9

EP 1 830 264 A1

**Description**

La présente invention concerne les microprocesseurs et les microcontrôleurs, et plus particulièrement les mécanismes de changement de contexte en cas d'interruption d'une tâche par une tâche plus prioritaire.

Certains microprocesseurs ou microcontrôleurs offrent la possibilité de basculer d'une tâche en cours d'exécution vers une autre tâche plus prioritaire. Ce basculement est déclenché par l'apparition d'un événement par exemple un signal externe sur une ligne d'entrée du microprocesseur. Lorsqu'un tel événement se produit, le microprocesseur doit sauvegarder le contexte de la tâche interrompue, c'est-à-dire le contenu des registres du microprocesseur. Le contexte sauvegardé est restauré à la fin de l'exécution de la tâche plus prioritaire, lors de la reprise de l'exécution de la tâche interrompue. La sauvegarde de contexte est généralement effectuée en utilisant une pile mémoire (memory stack) prévue pour stocker une grande quantité de données d'une manière temporaire. Une pile mémoire est généralement gérée de manière que la dernière donnée qui y est mémorisée (sauvegardée) soit la première extraite (restaurée).

Les microprocesseurs comprennent un registre appelé "pointeur de pile" (stack pointer) dédié à la gestion de la pile mémoire. Le pointeur de pile contient l'adresse mémoire de la dernière donnée mémorisée dans la pile mémoire (ou de la première adresse disponible).

Le jeu d'instructions des microprocesseurs comprend des instructions d'accès à la pile mémoire, à savoir notamment des instructions de sauvegarde appelées "PUSH" permettant de sauvegarder le contenu d'un registre dans la pile mémoire et des instructions de restauration appelées "POP" permettant de restaurer le contenu d'un registre précédemment sauvegardé dans la pile mémoire.

Une pile mémoire peut être gérée de deux manières. Elle peut s'accroître vers les adresses mémoire inférieures ou vers les adresses mémoire supérieures. Si elle s'accroît vers les adresses mémoire supérieures, l'exécution d'une instruction PUSH est précédée d'une incrémentation du pointeur pile, tandis que l'exécution d'une instruction POP est suivie d'une décrémentation de celui-ci. Inversement, si la pile mémoire s'accroît vers les adresses mémoire inférieures, l'exécution d'une instruction PUSH est précédée d'une décrémentation du pointeur pile, tandis que l'exécution d'une instruction POP est suivie d'une incrémentation de celui-ci.

L'utilisation d'une pile mémoire pour sauvegarder des contextes de tâche présente l'avantage de pouvoir gérer un grand nombre de niveaux de priorités de tâches, dans la limite de la taille mémoire attribuée à la pile mémoire. La plupart des microprocesseurs à jeu d'instructions réduit RISC (Reduced Instruction Set Computer) utilisent une telle pile mémoire.

Lorsque le microprocesseur comporte un grand nombre de registres, les opérations de sauvegarde et de restauration de contexte peuvent être très coûteuses en taille mémoire programme, s'il faut prévoir dans le programme une instruction de sauvegarde et une instruction de restauration pour chaque registre. Pour optimiser l'utilisation de la mémoire programme, certains microprocesseurs comportent dans leur jeu d'instructions des instructions de sauvegarde et de restauration de plusieurs de leurs registres. Lors d'une opération de prédécodage, l'instruction est décomposée en une ou plusieurs micro instructions qui commandent chacune la sauvegarde ou la restauration d'un registre. Les micro instructions sont ensuite exécutées successivement par le microprocesseur.

Il en résulte que l'exécution d'une instruction de sauvegarde ou de restauration de registres peut durer un grand nombre de cycles d'horloge du microprocesseur. Comme la décomposition en micro instructions est effectuée par les circuits internes de décodage du microprocesseur, les micro instructions ne figurent pas dans la mémoire programme. Par conséquent, l'exécution d'une instruction de sauvegarde ou de restauration de plusieurs registres ne peut pas être interrompue par une tâche plus prioritaire. Il en résulte un délai de latence d'interruption (délai entre l'apparition de l'événement déclencheur d'une interruption ou d'une tâche plus prioritaire et le début de l'exécution de la routine d'interruption ou de la tâche plus prioritaire) qui peut être incompatible avec les contraintes temps réel de certains systèmes.

Ainsi, la présente invention vise à réduire le délai de latence d'interruption dans un procédé et un dispositif d'exécution d'une instruction de sauvegarde/restauration de plusieurs registres internes d'un processeur.

La présente invention vise également un processeur (microprocesseur ou microcontrôleur) comportant dans son jeu d'instructions des instructions de sauvegarde/ restauration de contexte, dont l'exécution présente un délai de latence d'interruption réduit.

Ces objectifs sont atteints par la prévision d'un procédé d'exécution par un processeur d'une instruction de sauvegarde/restauration de plusieurs registres du processeur, comprenant des étapes de décomposition de l'instruction de sauvegarde/restauration pour générer des micro instructions de sauvegarde/restauration du contenu d'un registre, et d'exécution de chacune des micro instructions. Selon l'invention, le procédé comprend des étapes consistant à :

- initialiser un état d'avancement de la sauvegarde/restauration des registres,
- mettre à jour l'état d'avancement de la sauvegarde/ restauration à chaque génération d'une micro instruction de sauvegarde/restauration d'un registre,
- sauvegarder l'état d'avancement en cas d'interruption de la sauvegarde/restauration des registres, pour exécuter une tâche plus prioritaire et restaurer l'état d'avancement lors de la reprise de la sauvegarde/ restauration des registres.

Selon un mode de réalisation de l'invention, l'état d'avancement de la sauvegarde/restauration est mémorisé dans un registre d'état du processeur.

Selon un mode de réalisation de l'invention, le registre d'état du processeur est mémorisé automatiquement en cas d'interruption de l'exécution d'une tâche en cours d'exécution par une tâche plus prioritaire.

Selon un mode de réalisation de l'invention, l'instruction de sauvegarde/restauration porte sur tous les registres d'un ensemble de registres généraux du processeur.

Selon un mode de réalisation de l'invention, les registres à sauvegarder/restaurer sont indiqués dans un mot binaire associé à l'instruction de sauvegarde/restauration.

Selon un mode de réalisation de l'invention, chaque bit à 1 du mot binaire indique par son rang dans le mot binaire un numéro de registre à sauvegarder/restaurer, le procédé comprenant des étapes d'extraction du rang d'un bit à un du nombre binaire.

Selon un mode de réalisation de l'invention, l'état d'avancement de la sauvegarde/ restauration est mémorisé sous la forme d'un mot binaire dont les bits dans un état prédéfini indiquent par leur rang les registres déjà sauvegardés/ restaurés.

Selon un mode de réalisation de l'invention, l'état d'avancement de la sauvegarde/restauration est initialisé à la fin de l'exécution de l'instruction de sauvegarde/restauration, à une valeur initiale indiquant qu'aucun registre n'a été sauvegardé ou restauré.

Selon un mode de réalisation de l'invention, l'état d'avancement" de la sauvegarde/ restauration est initialisé après avoir été sauvegardé, en cas d'interruption de la sauvegarde/ restauration de registres.

L'invention concerne également un dispositif d'exécution d'une instruction de sauvegarde/restauration de plusieurs registres d'un processeur, comprenant une unité d'expansion pour décomposer une instruction de sauvegarde/ restauration de plusieurs registres et générer des micro instructions de sauvegarde/restauration du contenu d'un registre exécutables par un étage d'exécution du processeur. Selon l'invention, le dispositif comprend :

- des moyens d'initialisation d'un état d'avancement de l'exécution d'une instruction de sauvegarde/ restauration de registres,
- des circuits pour mettre à jour l'état d'avancement à chaque génération d'une micro instruction de sauvegarde/ restauration d'un registre,
- des moyens pour sauvegarder l'état d'avancement en cas d'interruption de l'exécution d'une instruction de sauvegarde/restauration de registres par une tâche plus prioritaire, et pour restaurer l'état d'avancement lors de la reprise de l'exécution de l'instruction de sauvegarde/restauration.

Selon un mode de réalisation de l'invention, l'instruction de sauvegarde/restauration porte sur tous les registres d'un ensemble de registres généraux du processeur.

Selon un mode de réalisation de l'invention, les registres à sauvegarder/restaurer sont indiqués dans un mot binaire associé à l'instruction de sauvegarde/restauration.

Selon un mode de réalisation de l'invention, chaque bit à 1 du mot binaire indique par son rang dans le mot binaire un numéro de registre à sauvegarder/restaurer, le dispositif comprenant des circuits d'extraction du rang d'un bit à un du nombre binaire.

Selon un mode de réalisation de l'invention, l'état d'avancement de la sauvegarde/ restauration est mémorisé sous la forme d'un mot binaire dont les bits à 0 indiquent par leur rang les registres déjà sauvegardés/restaurés.

Selon un mode de réalisation de l'invention, le dispositif comprend des moyens pour initialiser l'état d'avancement de la sauvegarde/restauration à la fin de l'exécution de l'instruction de sauvegarde/ restauration, à une valeur initiale indiquant qu'aucun registre n'a été sauvegardé ou restauré.

Selon un mode de réalisation de l'invention, le dispositif comprend des moyens pour initialiser l'état d'avancement de la sauvegarde/restauration après sauvegarde de l'état d'avancement de la sauvegarde/restauration, en cas d'interruption de la sauvegarde/restauration des registres.

L'invention concerne également un processeur comprenant :

- un ensemble de registres généraux, et
- un jeu d'instructions comportant des instructions de sauvegarde/restauration de plusieurs des registres généraux.

Selon l'invention, le processeur comprend un dispositif d'exécution d'une instruction de sauvegarde/restauration tel que définit précédemment.

Selon un mode de réalisation de l'invention, l'état d'avancement de la sauvegarde/restauration est mémorisé dans un registre d'état du processeur.

Selon un mode de réalisation de l'invention, le processeur comprend des moyens pour mémoriser automatiquement le registre d'état du processeur en cas d'interruption de l'exécution d'une tâche par une tâche plus prioritaire.

Selon un mode de réalisation de l'invention, le processeur présente une architecture de type pipeline, et le dispositif appartient à un étage de lecture et de prédécodage permettant de lire une instruction dans la mémoire programme et prédécoder l'instruction lue.

Selon un mode de réalisation de l'invention, le processeur est de type microprocesseur, ou microcontrôleur.

Ces objets, caractéristiques et avantages ainsi que d'autres de la présente invention seront exposés plus en détail dans la description suivante d'un mode de réalisation préféré de l'invention, faite à titre non limitatif en relation avec les figures jointes parmi lesquelles :

- la figure 1 représente sous la forme de blocs l'architecture d'un microcontrôleur,
- la figure 2 représente des registres du microcontrôleur,
- la figure 3 illustre le contenu d'un registre d'état du microcontrôleur,
- la figure 4 représente sous la forme de blocs une unité d'expansion d'instruction selon l'invention, pour générer des micro instructions de sauvegarde/restauration d'un registre,
- les figures 5 à 8 sont des schémas électriques de circuits de l'unité d'expansion représentée sur la figure 4,
- la figure 9 illustre le procédé de décomposition d'une instruction de sauvegarde/restauration en micro instructions, selon l'invention.

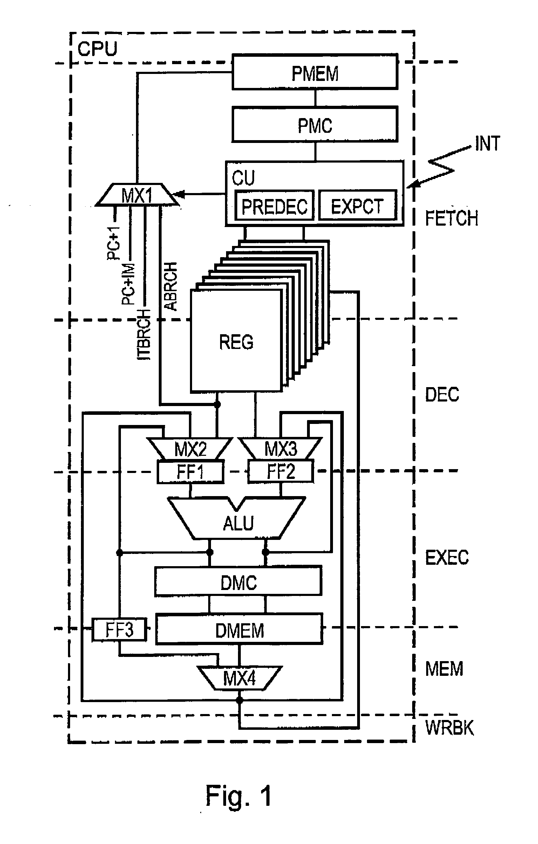

La figure 1 représente un exemple d'architecture d'une unité centrale CPU d'un microcontrôleur. L'unité centrale présente une architecture de type pipeline, c'est-à-dire à plusieurs étages travaillant en série sur une instruction et en parallèle sur des instructions successives. Ainsi, l'unité centrale comprend par exemple les cinq étages suivants :

- un étage de lecture et de prédécodage FETCH pour lire une instruction dans la mémoire programme et prédécoder l'instruction lue,
- un étage de décodage DEC pour décoder l'instruction prédécodée,
- un étage d'exécution EXEC pour exécuter l'instruction décodée,
- un étage MEM d'accès à la mémoire de données pour lire ou écrire une donnée dans la mémoire de données, et
- un étage d'écriture WRBK pour écrire une donnée dans un registre.

L'étage FETCH comprend une mémoire programme PMEM, une unité de gestion de la mémoire programme PMC, une unité de contrôle CU et un multiplexeur MX1 pour sélectionner une valeur de pointeur d'instruction de programme PC en fonction d'un signal de commande émis par l'unité de contrôle CU. La mémoire programme PMEM peut comprendre une mémoire cache.

L'unité de contrôle CU est connectée à un banc de registres REG du microcontrôleur, et comprend une unité de prédécodage d'instruction PREDEC.

Le multiplexeur MX1 permet de sélectionner une valeur à attribuer à un pointeur d'instruction PC dans la mémoire programme PMEM. La valeur sélectionnée est soit la valeur du pointeur d'instruction PC incrémentée de 1 pour accéder à l'instruction suivante dans la mémoire programme, soit la valeur du pointeur d'instruction additionnée à une valeur IM pour exécuter un saut relatif, soit une adresse de branchement ABRCH pour exécuter un saut absolu vers une adresse spécifiée, soit une adresse d'interruption ITBRCH pour lancer l'exécution d'une routine d'interruption ou d'exception.

L'étage de décodage DEC comprend des multiplexeurs MX2, MX3 comportant chacun une entrée connectée à un port respectif du banc de registres REG. Les multiplexeurs MX2 et MX3 sont destinés à masquer les latences lorsque des instructions successives dépendent les unes des autres.

L'étage d'exécution EXEC comprend une unité arithmétique et logique ALU comportant deux entrées reliées chacune à une sortie respective des multiplexeurs MX2, MX3 par l'intermédiaire d'une bascule FF1 FF2. L'unité ALU comprend une sortie de donnée et une sortie d'adresse reliées à une mémoire de données DMEM par l'intermédiaire d'une unité de gestion de la mémoire de données DMC. Chacune des sorties de l'unité ALU est également connectée à une entrée des multiplexeurs MX2, MX3. La mémoire de données peut également comprendre une mémoire cache.

L'étage MEM comprend un multiplexeur MX4 comportant une entrée recevant les données lues dans la mémoire DMEM et une entrée connectée à la sortie de donnée de l'unité ALU par l'intermédiaire d'une bascule FF3. Le multiplexeur MX4 comprend une sortie connectée à une entrée de chacun des multiplexeurs MX2, MX3.

L'étage WRBK comprend une liaison entre la sortie du multiplexeur MX4 et une entrée du banc de registres REG. Cette liaison permet de stocker dans un registre du banc de registres REG une donnée lue dans la mémoire DMEM ou issue de l'unité ALU.

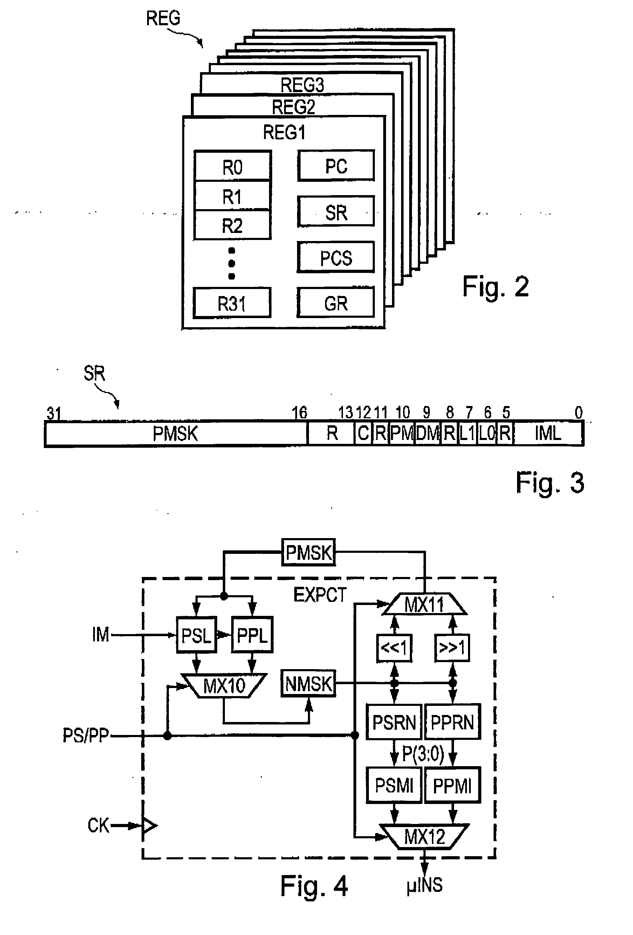

La figure 2 représente le banc de registres REG. Sur cette figure, le banc de registres REG comprend plusieurs ensembles de registres REG1, REG2, REG3, ... Chaque ensemble de registres est associé à un contexte d'exécution permettant au microcontrôleur d'exécuter plusieurs tâches en parallèle, chaque tâche possédant son propre ensemble de registres REGi. De cette manière, il n'est pas nécessaire de sauvegarder et restaurer le contenu des registres dans une pile mémoire lors d'une interruption d'une tâche par une tâche plus prioritaire, si ces deux tâches utilisent des ensembles de registres REGi différents.

Chaque ensemble de registres REGi comprend des registres généraux R0-R31 utilisés pour le traitement d'adresses et de données, et des registres d'état et de contrôle du microcontrôleur. Les registres généraux comprennent notamment un registre de pointeur de pile. Les registres d'état et de contrôle comprennent un registre de pointeur de programme PC, un registre d'état SR, un registre de mode de fonctionnement PCS et un registre de garde d'instruction GR permettant d'exécuter plus efficacement des instructions de saut et des instructions conditionnelles.

Le microcontrôleur comprend un jeu d'instructions comportant des instructions décomposables en micro instructions exécutables par l'étage EXEC. L'unité de contrôle CU comprend une unité d'expansion d'instruction EXPCT pour décomposer des instructions du jeu d'instructions en micro instructions.

Le jeu d'instruction du microcontrôleur comprend notamment des instructions de sauvegarde PUSH et de restauration POP de un ou plusieurs registres d'un ensemble de registres REGi. Par exemple, les instructions de sauvegarde PUSH et de restauration POP comprennent des instructions de sauvegarde et de restauration des 16 premiers registres généraux R0-R15, et des 16 derniers registres généraux R16-R31. Ces instructions sont associées à une valeur immédiate sur 16 bits indiquant quels sont les registres à sauvegarder ou à restaurer parmi les 16 premiers ou 16 derniers registres généraux. Par exemple, le rang de chaque bit à 1 de la valeur immédiate correspond au numéro d'un registre à sauvegarder ou à restaurer (éventuellement décalé de 16). Alternativement, les registres à sauvegarder ou à restaurer sont spécifiés dans un registre de contrôle qui est chargé préalablement à l'exécution de l'instruction PUSH ou POP.

La figure 3 représente le contenu du registre d'état SR. Le registre SR comprend des champs réservés R, un champ de masque d'interruption IML sur 5 bits, des champs L0, L1 indiquant l'état d'activation de boucles matérielles sur 1 bit, un champ DM indiquant l'état d'activation d'un mode de mise au point sur 1 bit, un champ PM indiquant l'état d'activation d'un mode de privilège sur 1 bit, et un champ de retenue C sur 1 bit utilisé par l'unité ALU.

Selon l'invention, le registre SR comprend également un champ PMSK mémorisant sur 16 bits l'état d'avancement de l'exécution d'une instruction de sauvegarde ou de restauration des 16 premiers R0-R15 ou des 16 derniers registres généraux R16-R31. Plus précisément, le champ PMSK mémorise les numéros des registres qui n'ont pas été sauvegardés ou restaurés. Ce champ est mis à jour à chaque fois qu'une micro instruction de sauvegarde ou de restauration est générée. Cette disposition permet de rendre interruptible les instructions de sauvegarde PUSH et de restauration POP.

Par exemple, chaque bit du champ PMSK correspond à un numéro de registre. Durant l'exécution d'une instruction PUSH, tous les bits de poids faible du champ PMSK sont à 0 jusqu'au bit dont le rang correspond au numéro du dernier registre sauvegardé (décalé de 16 si l'instruction concerne les registres R16 à R31), et tous les autres bits du champ PMSK sont à 1. Durant l'exécution d'une instruction POP, tous les bits de poids fort du champ PMSK sont à 0 jusqu'au bit dont le rang correspond au numéro du dernier registre sauvegardé (décalé de 16 si l'instruction concerne les registres R16 à R31), et tous les autres bits du champ sont à 1.

La figure 4 représente l'unité d'expansion d'instruction EXPCT. Pour traiter des instructions PUSH ou POP, l'unité d'expansion EXPCT comprend :

- un registre NMSK de mémorisation d'une valeur intermédiaire,
- un circuit logique PSL de mise à jour du contenu du registre NMSK lorsque l'instruction à traiter est une instruction PUSH,
- un circuit logique PPL de mise à jour du contenu du registre NMSK lorsque l'instruction à traiter est une instruction POP,
- trois multiplexeurs MX10, MX11, MX12 commandés par un signal binaire PS/PP indiquant si l'instruction à traiter est une instruction PUSH ou POP,
- un circuit de décalage vers la gauche <<1 et un circuit de décalage vers la droite >>1,
- un circuit logique PSRN de calcul d'un numéro de registre à sauvegarder en fonction du contenu du registre NMSK,
- un circuit logique PPRN de calcul d'un numéro de registre à restaurer en fonction du contenu du registre NMSK,
- un circuit logique PSMI permettant de générer une micro instruction $\mu$INS de type PUSH Ri à partir du numéro de registre P(3:0) fourni par le circuit PSRN, et
- un circuit logique PPMI permettant de générer une micro instruction $\mu$INS de type POP Ri à partir du numéro de registre P(3:0) fourni par le circuit PPRN.

Les circuits PSL et PPL reçoivent en entrée la valeur du champ PMSK ainsi que la valeur immédiate IM associée à l'instruction de sauvegarde ou de restauration, indiquant les numéros des registres à sauvegarder ou à restaurer. La sortie des circuits PSL et PPL est reliée à l'entrée du registre NMSK par l'intermédiaire du multiplexeur MX10 qui applique au registre NMSK la valeur de sortie du circuit PSL ou du circuit PPL en fonction de la valeur du signal PS/PP. Le registre NMSK comprend une sortie connectée aux circuits de décalage vers la gauche <<1 et vers la droite >>1. Les circuits de décalage fournissent en sortie la valeur du registre décalée de 1 bit respectivement vers la gauche et vers la droite. La sortie de chacun des circuits de décalage est reliée à l'entrée du champ PMSK par l'intermédiaire du multiplexeur MX11 qui sélectionne la sortie de l'un ou l'autre des circuits de décalage en fonction de la valeur du signal PS/PP. La sortie du registre NMSK est également connectée aux circuits logiques PSRN et PPRN. Les circuits logiques PSRN et PPRN comprennent chacun une sortie fournissant un numéro de registre P(3:0) sur 3 bits du registre à sauvegarder ou à restaurer. La sortie du circuit PSRN est connectée à l'entrée du circuit PSMI, et 1a sortie du circuit PPRN est connectée à l'entrée du circuit PPMI. La sortie de chacun des circuits PSMI et PPMI est connectée à une entrée du multiplexeur MX12 dont la sortie fournit une micro instruction μINS exécutable par l'étage d'exécution EXEC.

L'unité d'expansion EXPCT est cadencée par le signal d'horloge CK du microcontrôleur de manière à ce que le registre NMSK et le champ PMSK soient mis à jour une fois à chaque cycle d'horloge.

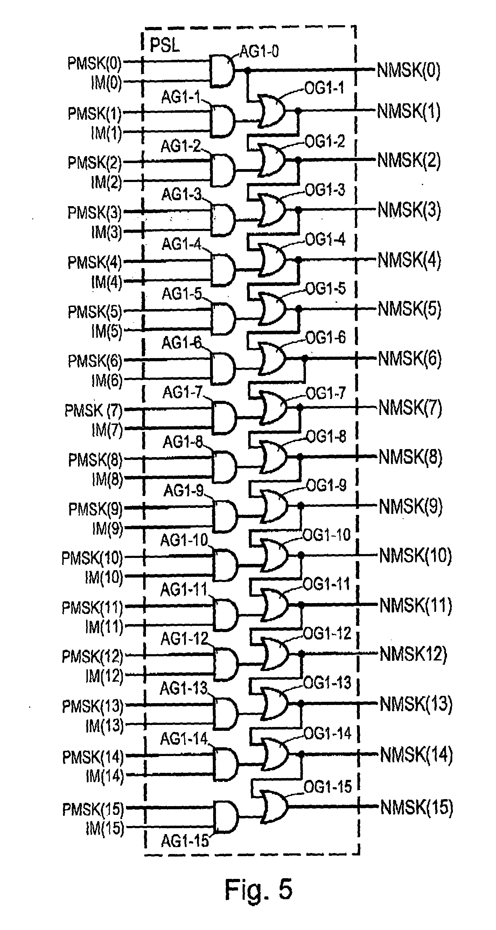

La figure 5 est le schéma électrique du circuit PSL. Ce circuit comprend 16 portes logiques AG1-0 à AG1-15 de type ET, et 15 portes logiques DG1-1 à OG1-15 de type OU. Chacune des portes AG1-i reçoit en entrée un bit PMSK(i) du champ PMSK et un bit TM(i) de même rang i de la valeur immédiate IM associée à l'instruction PUSH, POP à exécuter (i étant un nombre entier compris entre 0 et 15. La sortie de la porte AG1-0 recevant en entrée les bits PMSK(0) et IM(0) de rang 0, fournit un bit NMSK(0) de même rang, qui est mémorisé dans le registre NMSK. Chacune des sorties des autres portes AG1-i (i compris entre 1 et 15) est connectée à une entrée de la porte OG1-i dont une autre entrée est connectée à la sortie de la porte AG1-(i-1) recevant les bits PMSK(i-1) et IM(i-1) de rang immédiatement inférieur i-1. Chacune des sorties des portes OG1-i fournit un bit NMSK(i) de rang i, qui est mémorisé dans le registre NMSK. Ainsi, le circuit PSL réalise les calculs suivants :

$$\text{NMSK(0)} = \text{PMSK(0) ET IM(0)} \qquad\qquad (1)$$

$$\text{NMSK(i)} = (\text{PMSK(i) ET IM(i) OU NMSK(i-1))}, \qquad (2)$$

i étant un nombre entier variant de 1 à 15.

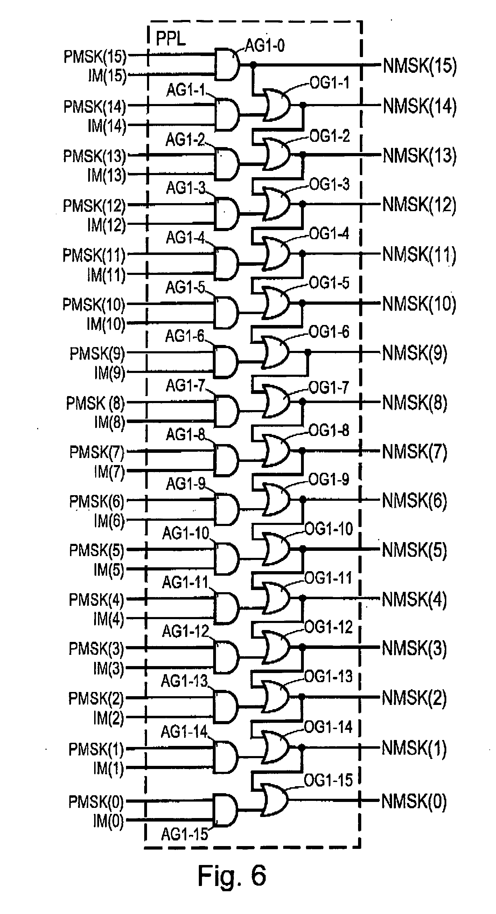

La figure 6 est le schéma électrique du circuit PPL. Ce circuit est identique au circuit PSL, mais les entrées et les sorties de ce circuit sont inversées. Ainsi, les bits PMSK(15) et IM(15) de rang 15 sont appliqués à la porte AG1-0 qui fournit le bit NMSK(15) de même rang de la valeur du registre NMSK. Les bits PMSK(15-j) et IM(15-j) de rang 15-j sont appliqués à la porte AG1-j, et les bits NMSK(15-j) de rang 15-j sont fournis par les portes OG1-j (j étant un nombre entier compris entre 1 et 15. Ainsi, le circuit PPL réalise les calculs suivants :

$$\text{NMSK(15)} = \text{PMSK(15) ET IM(15)} \qquad\qquad (3)$$

$$\text{NMSK(i)} = (\text{PMSK(i) ET IM(i)}) \text{ OU NMSK(i+1)}, \qquad (4)$$

i étant un nombre entier variant de 14 à 0.

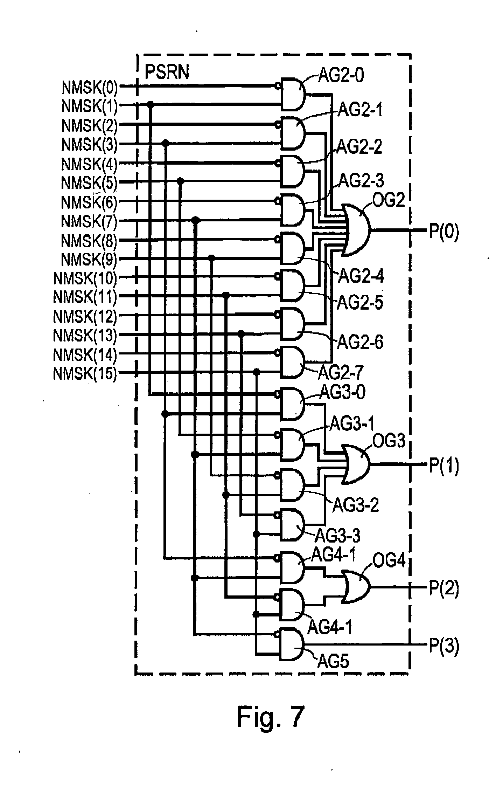

La figure 7 est le schéma électrique du circuit PSRN. Le circuit PSRN comprend des portes logiques AG2-0 à AG2-7, AG3-0 à AG3-3, AG4-0, AG4-1 et AG5 de type ET, comportant une entrée inversée et une entrée non inversée, et trois portes logiques OG2, OG3, OG4 de type OU. L'entrée inversée de chacune des portes AG2-i reçoit le bit NMSK(2i), et l'entrée non inversée de ces portes reçoit le bit NMSK(2i+1), i étant un nombre entier compris entre 0 et 7. Les sorties des portes AG2-i sont connectées à une entrée respective de la porte logique OG2 dont une sortie fournit le bit P(0) de rang 0 du numéro de registre à sauvegarder.

L'entrée inversée de chacune des portes AG3-j reçoit le bit NMSK(4j+1), et l'entrée non inversée de ces portes reçoit le bit NMSK(4j+3), j étant un nombre entier compris entre 0 et 3. Les sorties des portes AG3-j sont connectées à une entrée de la porte OG3 dont une sortie fournit le bit P(1) de rang 1 du numéro de registre à sauvegarder.

L'entrée inversée de chacune des portes AG4-k reçoit le bit NMSK(8k+3), et l'entrée non inversée de ces portes reçoit le bit NMSK(8k+7), k étant un nombre entier égal à 0 ou 1. Les sorties des portes AG4-k sont connectées à une entrée de la porte OG4 dont une sortie fournit le bit P(2) de rang 2 du numéro de registre à sauvegarder.

L'entrée inversée de la porte AG5 reçoit le bit NMSK(7), et l'entrée non inversée de cette porte reçoit le bit NMSK(15). Une sortie de la porte AG5 fournit le bit P(3) de rang 3 du numéro de registre à sauvegarder.

Ainsi le circuit PSRN réalise les calculs suivants :

$$P(0) = (NMSK(1) \ ET \ NON \ NMSK(0)) \ OU$$
$$(NMSK(3) \ ET \ NON \ NMSK(2)) \ OU$$
$$(NMSK(5) \ ET \ NON \ NMSK(4)) \ OU$$
$$(NMSK(7) \ ET \ NON \ NMSK(6)) \ OU$$
$$(NMSK(9) \ ET \ NON \ NMSK(8)) \ OU$$
$$(NMSK(11) \ ET \ NON \ NMSK(10)) \ OU$$
$$(NMSK(13) \ ET \ NON \ NMSK(12)) \ OU$$
$$(NMSK(15) \ ET \ NON \ NMSK(14)) \qquad (5)$$

$$P(1) = (NMSK(3) \ ET \ NON \ NMSK(1)) \ OU$$
$$(NMSK(7) \ ET \ NON \ NMSK(5)) \ OU$$
$$(NMSK(11) \ ET \ NON \ NMSK(9)) \ OU$$
$$(NMSK(15) \ ET \ NON \ NMSK(13)) \qquad (6)$$

$$P(2) = (NMSK(15) \ ET \ NON \ NMSK(11)) \ OU$$
$$(NMSK(7) \ ET \ NON \ NMSK(3)) \qquad (7)$$

$$P(3) = NMSK(15) \ ET \ NON \ NMSK(7) \qquad (8)$$

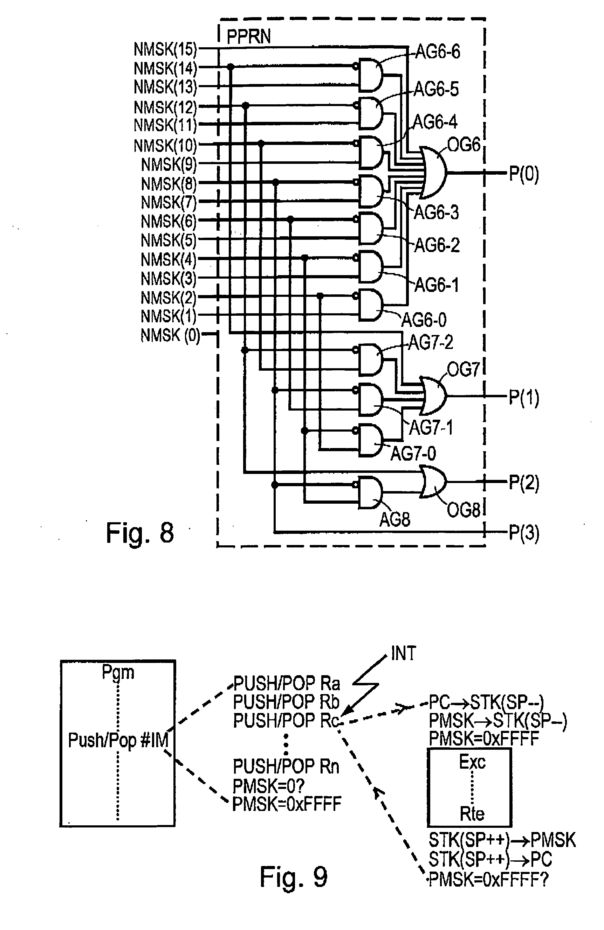

La figure 8 est le schéma électrique du circuit PPRN. Le circuit PPRN comprend des portes logiques AG2-0 à AG6-6, AG7-0 à AG7-2 et AG8 de type ET, comportant une entrée inversée et une entrée non inversée, et trois portes logiques OG6, OG7, OG8 de type OU. L'entrée inversée de chacune des portes ET AG6-i reçoit le bit NMSK(2i+2), et l'entrée non inversée de ces portes reçoit le bit NMSK(2i+1), i étant un nombre entier compris entre 0 et 6. Le bit NMSK(15) et les sorties des portes AG6-i sont connectées à une entrée respective de la porte logique OG6 dont une sortie fournit le bit P(0) de rang 0 du numéro de registre à restaurer.

L'entrée inversée de chacune des portes AG7-j reçoit le bit NMSK (4j+4), et l'entrée non inversée de ces portes reçoit le bit NMSK(4j+2), j étant un nombre entier compris entre 0 et 2. Le bit NMSK(14) et les sorties des portes AG7-j sont connectées à une entrée de la porte OG3 dont une sortie fournit le bit P(1) de rang 1 du numéro de registre à restaurer.

L'entrée inversée de la porte AG8 reçoit le bit NMSK(8), et l'entrée non inversée de cette porte reçoit le bit NMSK(4). Le bit NMSK(12) et la sortie de la porte AG8 sont connectées à une entrée de la porte OG8 dont une sortie fournit le bit P(2) de rang 2 du numéro de registre à restaurer. Le bit NMSK(8) fournit le bit P(3) de rang 3 du numéro de registre à restaurer.

Ainsi le circuit PPRN réalise les calculs suivants :

$$P(0) = NMSK(15) \text{ OU } (NMSK(13) \text{ ET NON } NMSK(14))$$
$$\text{OU } (NMSK(11) \text{ ET NON } NMSK(12))$$
$$\text{OU } (NMSK(9) \text{ ET NON } NMSK(10))$$
$$\text{OU } (NMSK(7) \text{ ET NON } NMSK(8))$$
$$\text{OU } (NMSK(5) \text{ ET NON } NMSK(6))$$
$$\text{OU } (NMSK(3) \text{ ET NON } NMSK(4))$$
$$\text{OU } (NMSK(1) \text{ ET NON } NMSK(2)) \qquad (9)$$

$$P(1) = NMSK(14) \text{ OU } (NMSK(10) \text{ ET NON } NMSK(12))$$
$$\text{OU } (NMSK(6) \text{ ET NON } NMSK(8))$$
$$\text{OU } (NMSK(2) \text{ ET NON } NMSK(4)) \qquad (10)$$

$$P(2) = NMSK(12) \text{ OU } (NMSK(4) \text{ ET NON } NMSK(8)) \qquad (11)$$

$$P(3) = NMSK(8) \qquad (12)$$

A l'initialisation du microcontrôleur, le champ PMSK est initialisé à la valeur 0xFFFF. A chaque cycle d'horloge CK lors du traitement d'une instruction de type PUSH ou POP à, l'unité d'expansion EXPCT fournit une micro instruction $\mu$INS de sauvegarde ou de restauration d'un registre. Cette micro instruction est fournie à l'étage d'exécution EXEC qui l'exécute pour sauvegarder ou restaurer le registre correspondant pendant qu'une nouvelle micro instruction est générée. Lorsque le contenu du champ PMSK atteint la valeur 0x0000, toutes les micro instructions de sauvegarde ou de restauration de registre ont été générées. Le champ PMSK est alors immédiatement réinitialisé à la valeur 0xFFFF.

Pour illustrer le fonctionnement général de l'unité d'expansion EXPCT dans le cas d'une instruction PUSH, le tableau 1 suivant donne à chaque cycle les valeurs du champ PMSK, du registre NMSK et du numéro P de registre calculé, lorsque la valeur immédiate IM associée à l'instruction vaut par exemple 0x1248.

Tableau 1

| Cycle | PMSK | NMSK | P | $\mu$INS |
|-------|------|------|---|-------|
| 1 | 0xFFFF | 0xFFF8 | 3 | PUSH R3 |
| 2 | 0xFFF0 | 0xFFC0 | 6 | PUSH R6 |
| 3 | 0xFF80 | 0xFE00 | 9 | PUSH R9 |
| 4 | 0xFC00 | 0xF000 | 12 | PUSH R12 |
| 5 | 0xE000 | 0x0000 | - | - |
|   | 0x0000 | - | - | - |

Le tableau 1 montre que l'instruction PUSH #0x1248 est décomposée successivement en micro instructions PUSH de sauvegarde des registres R3, R6, R9 et R12.

Le tableau 2 suivant illustre de la même façon le fonctionnement général de l'unité d'expansion EXPCT dans le cas d'une instruction POP associée à la valeur immédiate IM = 0x1248.

Tableau 2

| Cycle | PMSK | NMSK | P | $\mu$INS |
|-------|------|------|---|-------|
| 1 | 0xFFFF | 0x1FFF | 12 | POP R12 |

(suite)

| Cycle | PMSK | NMSK | P | μINS |
|-------|--------|--------|---|---------|
| 2 | 0x0FFF | 0x03FF | 9 | POP R9 |
| 3 | 0x01FF | x007F | 6 | POP R6 |
| 4 | 0x003F | 0x000F | 3 | POP R3 |
| 5 | 0x0007 | 0x0000 | - | - |
|   | 0x0000 | - | - | - |

Le tableau 2 montre que l'instruction POP #0x1248 est décomposée successivement en micro instructions POP de restauration des registres R12, R9, R6 et R3.

Le nombre de cycles nécessaires pour fournir toutes les micro instructions de sauvegarde ou de restauration des registres dépend du nombre de registres à sauvegarder, c'est-à-dire du nombre de bits à 1 dans la valeur immédiate IM associée à l'instruction.

Il est à noter que l'ordre dans lequel les registres sont restaurés correspond bien à l'ordre inverse dans lequel ils sont sauvegardés, ce qui est conforme à la gestion d'une pile mémoire.

La figure 9 illustre le traitement d'expansion d'une instruction PUSH ou POP effectué par l'unité d'expansion EXPCT. Cette figure représente un programme Pgm stocké dans la mémoire programme PMEM du microcontrôleur et comportant une instruction PUSH ou POP suivie d'une valeur immédiate IM. Lorsque l'unité de contrôle CU reçoit une telle instruction, elle fournit la valeur immédiate IM associée à l'unité d'expansion EXPCT. L'unité d'expansion EXPCT fournit alors successivement toutes les micro instructions de sauvegarde ou de restauration PUSH/POP Ri (i = a, b, c, ... n ) des registres indiqués par la valeur IM. Chaque micro instruction apparaissant en sortie de l'unité d'expansion EXPCT est envoyée à l'étage de décodage DEC par l'unité de contrôle CU. Dès que le champ PMSK est nul, il est réinitialisé à la valeur 0xFFFF.

Si une interruption INT apparaît durant la sauvegarde ou la restauration des registres Ri, l'unité de contrôle CU sauvegarde dans la pile mémoire, le registre de pointeur de programme PC et le registre SR d'état contenant le champ PMSK (PC→STK(SP--) et PMSK→STK (SP--)). Avant chaque sauvegarde, l'unité de contrôle décrémente le pointeur de pile SP. Ensuite, l'unité de contrôle initialise le champ PMSK à 0xFFFF afin de permettre l'exécution d'une instruction PUSH ou POP dans la routine d'interruption Exc, et lance l'exécution de cette dernière. A l'exécution de la dernière instruction Rte de la routine d'interruption, l'unité de contrôle CU restaure le registre d'état SR contenant le champ PMSK et le registre PC, sauvegardés dans la pile mémoire STK (STK(SP++)→PMSK et STK(SP++)→PC). A la suite de chaque restauration, le pointeur de pile SP est incrémenté. Si la valeur du champ PMSK est différente de sa valeur initiale 0xFFFF (PMSK=0XFFFF?), cela signifie que l'exécution de l'instruction en cours (indiquée par le registre PC) n'a pas été achevée. L'unité de contrôle reprend alors l'exécution de la sauvegarde ou de la restauration des registres Ri à partir de l'étape où celle-ci a été interrompue. Cette reprise est rendue possible, grâce au champ PMSK qui a été sauvegardé, puis restauré, et dont le contenu reflète l'état d'avancement de l'exécution interrompue de l'instruction PUSH ou POP.

Il apparaîtra clairement à l'homme de l'art que le procédé et le dispositif décrits ci-avant sont susceptibles de diverses autres variantes de réalisation et applications. Notamment, le procédé décrit est applicable au cas où tous les registres Ri sont systématiquement sauvegardés ou restaurés, c'est-à-dire lorsque l'instruction de sauvegarde/restauration n'est pas associée à une valeur immédiate précisant les registres qui doivent être sauvegardés ou restaurés.

Il n'est pas non plus nécessaire que l'état d'avancement de la sauvegarde ou de la restauration PMSK soit mémorisé dans le registre d'état SR du microcontrôleur. Cet état d'avancement peut être mémorisé dans tout autre registre ou même un registre spécifique. Il est toutefois nécessaire que cet état d'avancement soit sauvegardé lors d'un basculement de tâche ou de l'exécution d'une interruption. Le fait de mémoriser l'état d'avancement de la sauvegarde/ restauration dans le registre d'état du processeur offre l'avantage d'une sauvegarde et restauration automatique et systématique dans la plupart des microcontrôleurs et microprocesseurs. L'exploitation d'un champ non utilisé du registre d'état évite également d'augmenter le nombre de registres qui doivent être sauvegardés et restaurés à chaque interruption d'une tâche, et donc n'augmente pas le délai de latence d'exécution d'une interruption.

Par ailleurs, il peut être envisagé d'autres manières que celles décrites ci-avant de mémoriser l'état d'avancement des sauvegardes et restaurations de registres. Par exemple, PMSK peut mémoriser le numéro du dernier registre sauvegardé ou restauré ou du premier registre qui n'a pas été sauvegardé ou restauré.

Le procédé selon l'invention peut également être appliqué à un microprocesseur (ne comprenant pas de mémoire programme ou de donnée interne), et plus généralement, à tout microprocesseur ou microcontrôleur comprenant dans son jeu d'instructions des instructions de sauvegarde/restauration de plusieurs registres qui sont exécutées par une décomposition préalable en micro instructions. Par ailleurs, il n'est pas indispensable que le microprocesseur ou microcontrôleur présente une architecture de type pipeline ou équivalente à celle décrite en référence à la figure 1.

**Revendications**

1. Procédé d'exécution par un processeur d'une instruction de sauvegarde/restauration (PUSH #IM, POP #TM) de plusieurs registres (Ri) du processeur, comprenant des étapes de décomposition de l'instruction de sauvegarde/ restauration pour générer des micro instructions de sauvegarde/restauration (PUSH Ri, POP Ri) du contenu d'un registre (Ri), et d'exécution de chacune des micro instructions,
**caractérisé en ce qu'**il comprend des étapes consistant à :

 - initialiser un état d'avancement (PMSK) de la sauvegarde/restauration des registres (Ri),
 - mettre à jour l'état d'avancement de la sauvegarde/ restauration à chaque génération d'une micro instruction de sauvegarde/restauration d'un registre (PUSH Ri, POP Ri),
 - sauvegarder l'état d'avancement en cas d'interruption de la sauvegarde/restauration des registres, pour exécuter une tâche plus prioritaire et restaurer l'état d'avancement PMSK lors de la reprise de la sauvegarde/ restauration des registres.

2. Procédé selon la revendication 1, dans lequel l'état d'avancement de la sauvegarde/restauration (PMSK) est mémorisé dans un registre d'état (SR) du processeur.

3. Procédé selon la revendication 2, dans lequel le registre d'état (SR) du processeur est mémorisé automatiquement en cas d'interruption de l'exécution d'une tâche en cours d'exécution par une tâche plus prioritaire.

4. Procédé selon l'une des revendications 1 à 3, dans lequel l'instruction de sauvegarde/restauration (PUSH, POP) porte sur tous les registres d'un ensemble de registres généraux (Ri) du processeur.

5. Procédé selon l'une des revendications 1 à 3, dans lequel les registres à sauvegarder/restaurer (Ri) sont indiqués dans un mot binaire (IM) associé à l'instruction de sauvegarde/restauration (PUSH #IM, POP #IM).

6. Procédé selon la revendication 5, dans lequel chaque bit à 1 du mot binaire (IM) indique par son rang dans le mot binaire un numéro de registre (Ri) à sauvegarder/restaurer, le procédé comprenant des étapes d'extraction du rang d'un bit à un du nombre binaire.

7. Procédé selon l'une des revendications 1 à 6, dans lequel l'état d'avancement de la sauvegarde/ restauration (PMSK) est mémorisé sous la forme d'un mot binaire dont les bits dans un état prédéfini indiquent par leur rang les registres (Ri) déjà sauvegardés/restaurés.

8. Procédé selon la revendication 7, dans lequel l'état d'avancement de la sauvegarde/restauration (PMSK) est initialisé à la fin de l'exécution de l'instruction de sauvegarde/restauration, à une valeur initiale indiquant qu'aucun registre (Ri) n'a été sauvegardé ou restauré.

9. Procédé selon l'une des revendications 1 à 8, dans lequel l'état d'avancement de la sauvegarde/ restauration (PMSK) est initialisé après avoir été sauvegardé, en cas d'interruption de la sauvegarde/ restauration de registres.

10. Dispositif d'exécution d'une instruction de sauvegarde/restauration (PUSH #IM, POP #IM) de plusieurs registres (Ri) d'un processeur, comprenant une unité d'expansion (EXPCT) pour décomposer une instruction de sauvegarde/ restauration de plusieurs registres et générer des micro instructions de sauvegarde/restauration (PUSH Ri, POP Ri) du contenu d'un registre (Ri) exécutables par un étage d'exécution (EXEC) du processeur,
**caractérisé en ce qu'**il comprend :

 - des moyens d'initialisation (CU) d'un état d'avancement (PMSK) de l'exécution d'une instruction de sauvegarde/ restauration de registres (PUSH #IM, POP #IM),
 - des circuits (PSL, PPL, <<1, >>1) pour mettre à jour l'état d'avancement à chaque génération d'une micro instruction de sauvegarde/restauration d'un registre (PUSH Ri, POP Ri),
 - des moyens (CU) pour sauvegarder l'état d'avancement en cas d'interruption de l'exécution d'un instruction de sauvegarde/restauration de registres par une tâche plus prioritaire, et pour restaurer l'état d'avancement lors de la reprise de l'exécution de l'instruction de sauvegarde/restauration.

**11.** Dispositif selon la revendication 10, dans lequel l'instruction de sauvegarde/restauration porte sur tous les registres d'un ensemble de registres généraux (Ri) du processeur.

**12.** Dispositif selon la revendication 10, dans lequel les registres (Ri) à sauvegarder/restaurer sont indiqués dans un mot binaire (IM) associé à l'instruction de sauvegarde/restauration (PUSH #IM, POP #IM).

**13.** Dispositif selon la revendication 12, dans lequel chaque bit à 1 du mot binaire (IM) indique par son rang dans le mot binaire un numéro de registre (Ri) à sauvegarder/restaurer, le dispositif comprenant des circuits d'extraction (PSL, PPL, PSRN, PPRN) du rang d'un bit à un du nombre binaire.

**14.** Dispositif selon l'une des revendications 10 à 13, dans lequel l'état d'avancement de la sauvegarde/ restauration (PMSK) est mémorisé sous la forme d'un mot binaire dont les bits à 0 indiquent par leur rang les registres (Ri) déjà sauvegardés/restaurés.

**15.** Dispositif selon l'une des revendications 10 à 14, comprenant des moyens pour initialiser l'état d'avancement de la sauvegarde/restauration (PMSK) à la fin de l'exécution de l'instruction de sauvegarde/ restauration, à une valeur initiale indiquant qu'aucun registre (Ri) n'a été sauvegardé ou restauré.

**16.** Dispositif selon l'une des revendications 10 à 15, comprenant des moyens pour initialiser l'état d'avancement de la sauvegarde/restauration (PMSK) après sauvegarde de l'état d'avancement de la sauvegarde/restauration, en cas d'interruption de la sauvegarde/restauration des registres.

**17.** Processeur comprenant :

- un ensemble de registres généraux (Ri), et
- un jeu d'instructions comportant des instructions de sauvegarde/restauration (PUSH #IM, POP #IM) de plusieurs des registres généraux,

**caractérisé en ce qu'**il comprend un dispositif selon l'une des revendications 10 à 16.

**18.** Processeur selon la revendication 17, dans lequel l'état d'avancement de la sauvegarde/restauration (PMSK) est mémorisé dans un registre d'état (SR) du processeur.

**19.** Processeur selon la revendication 18, comprenant des moyens pour mémoriser automatiquement le registre d'état du processeur en cas d'interruption de l'exécution d'une tâche par une tâche plus prioritaire.

**20.** Processeur selon l'une des revendications 17 à 19, présentant une architecture de type pipeline, et dans lequel le dispositif appartient à un étage de lecture et de prédécodage (FETCH) permettant de lire une instruction dans la mémoire programme et prédécoder l'instruction lue.

**21.** Processeur selon l'une des revendications 17 à 20, de type microprocesseur ou microcontrôleur.

Fig. 1

REG

REG3

REG2

REG1

| R0 | PC |
| R1 | SR |
| R2 | PCS |
| ⋮ | |
| R31 | GR |

Fig. 2

SR

| 31 | 16 | 13 | 12 | 11 | 10 | 9 | 8 | 7 | 6 | 5 | 0 |
|---|---|---|---|---|---|---|---|---|---|---|---|
| PMSK | | R | C | R | PM | DM | R | L1 | L0 | R | IML |

Fig. 3

PMSK

EXPCT

IM → PSL PPL

MX10 NMSK

PS/PP

CK →

MX11

<<1 >>1

PSRN PPRN

P(3:0)

PSMI PPMI

MX12

↓ μINS

Fig. 4

Fig. 5

Fig. 6

Fig. 7

Fig. 8

Fig. 9

**Office européen des brevets**

**RAPPORT DE RECHERCHE EUROPEENNE**

Numéro de la demande

EP 06 02 4911

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 5 784 607 A (HENRY G GLENN [US] ET AL) 21 juillet 1998 (1998-07-21) * le document en entier * ----- | 1-21 | INV. G06F9/48 |
| Y | "TECHNIQUE TO IMPROVE CONTEXT SWITCHING PERFORMANCE IN A CPU" IBM TECHNICAL DISCLOSURE BULLETIN, IBM CORP. NEW YORK, US, vol. 33, no. 3B, 1 août 1990 (1990-08-01), pages 472-473, XP000124425 ISSN: 0018-8689 * le document en entier * ----- | 1-21 | |
| A | US 4 764 869 A (MIYAZAKI ET AL) 16 août 1988 (1988-08-16) * le document en entier * ----- | 1,10,17, 20,21 | |
| A | US 6 199 143 B1 (SEGAL EDWARD ROBERT) 6 mars 2001 (2001-03-06) * le document en entier * ----- | 1,4,10, 11,17, 20,21 | |

**DOMAINES TECHNIQUES RECHERCHES (IPC)**

G06F

Le présent rapport a été établi pour toutes les revendications

| Lieu de la recherche | Date d'achèvement de la recherche | Examinateur |
|---|---|---|
| La Haye | 4 juillet 2007 | Kielhöfer, Patrick |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   ...........................................................................
& : membre de la même famille, document correspondant

EP-O FORM 1503 03.82 (P04C02)

**ANNEXE AU RAPPORT DE RECHERCHE EUROPEENNE
RELATIF A LA DEMANDE DE BREVET EUROPEEN NO.**                    EP 06 02 4911

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-07-2007

| Document brevet cité au rapport de recherche | | Date de publication | Membre(s) de la famille de brevet(s) | | Date de publication |
|---|---|---|---|---|---|
| US 5784607 | A | 21-07-1998 | US | 5752015 A | 12-05-1998 |
| | | | US | 5774711 A | 30-06-1998 |
| US 4764869 | A | 16-08-1988 | JP | 2063657 C | 24-06-1996 |
| | | | JP | 7095278 B | 11-10-1995 |
| | | | JP | 62050934 A | 05-03-1987 |
| US 6199143 | B1 | 06-03-2001 | AUCUN | | |

EPO FORM P0460

Pour tout renseignement concernant cette annexe : voir Journal Officiel de l'Office européen des brevets, No.12/82